# EUROPEAN PATENT SPECIFICATION

(11) **EP 0 376 203 B1**
(45) Date of publication and mention of the grant of the patent: **15.03.1995**
(21) Application number: 89123804.0
(22) Date of filing: 22.12.1989
(51) Int. Cl.: B60J 7/12

(54) **Canvas top type sunroof structure for motor vehicle**
Stoffverdeckschiebedachanordnung für ein Kraftfahrzeug
Structure de toît ouvrant en toile pour un véhicule automobile

(30) Priority: 28.12.1988 JP 168379/88 U
(43) Date of publication of application: 04.07.1990
(73) Proprietor: OHI SEISAKUSHO CO., LTD., Isogo-ku Yokohama City (JP)
(72) Inventor: Nishikawa, Hiromitsu c/o Ohi Seisakusho Co., Ltd., Isogo-ku Yokohama City (JP); Kato, Yuichi c/o Ohi Seisakusho Co., Ltd., Isogo-ku Yokohama City (JP)
(74) Representative: Grünecker, Kinkeldey, Stockmair & Schwanhäusser Anwaltssozietät

(56) References cited:
- DE-A- 3 723 598
- GB-A- 2 141 389
- US-A- 5 016 939
- JP-U-6137019
- JP-U-6178020

## Description

### BACKGROUND OF THE INVENTION

### 1. Field of the Invention

The present invention relates in general to sunroof structures of a motor vehicle, and more particularly, to sunroof structures of a canvas top type which uses a canvas as a folding top which is adapted to close an aperture formed in a roof of the motor vehicle.

### 2. Description of the Prior Art

Hitherto, various types of sunroof structures have been proposed and put into practical use particularly in the field of wheeled motor vehicles. Some of them are of a so-called "canvas top type" which uses a canvas as the folding top for closing the roof aperture of the vehicle.

In order to clarify the task of the present invention, two conventional sunroof structures of such type will be outlined in the following, which are shown in JP-U-61-37019 and JP-U-61-28020, JP-U-37019/86 and JP-U-78020/86 respectively.

The sunroof structure of the former Publication comprises two guide rails which extend along lateral sides of a rectangular aperture formed in a vehicle roof. A canvas top for closing the roof aperture has a front part, a major middle part and a rear part which are guided by the guide rails through respective carrying devices. The carrying device for the front part is an elongate front member to which a front end of the canvas top is secured and which has longitudinal ends slidably engaged with the respective guide rails. The carrying device for the rear part of the canvas top is also an elongate rear member which connects the rear end of the canvas top to a rear end of the roof aperture. The carrying device for the major middle part comprises guided supporting bows and free supporting bows which alternate with each other. Each guided supporting bow supports thereon the canvas top and has longitudinal ends constantly guided by the guide rails, while, each free supporting bow is pivotally supported by the guided supporting bow and supports thereon the canvas top without being constantly guided by the guide rails. Biasing means is connected to each free supporting bow to bias the same upward relative to the associated guided supporting bow.

When the sunroof structure assumes its full-closed condition with the canvas top fully covering the roof aperture, the free supporting bows are forced to lie down due to the tension of the fully stretched canvas top against the force of the biasing means. Thus, as the front elongate member of the canvas top moves rearward for opening the roof aperture, the free supporting bows are gradually raised due to both reduction of the tension of the canvas top and the biasing force of the biasing means, thereby gradually forming several folds of the canvas top. When the front elongate member comes to its rearmost position to allow the sunroof structure to assume a full-open position, the canvas top is contracted with relatively large folds thereof placed at the rear end portion of the roof aperture.

However, due to its inherent construction, the sunroof structure has the following drawbacks.

That is, in the fully closing condition of the canvas top, the force created by the biasing means tends to make the sealing contact between the lateral sides of the canvas top and the peripheral side edges of the roof aperture poor. In fact, even under such fully closing condition, the biasing means operates to bias the canvas top in a direction to separate the same from the peripheral side edges of the roof aperture against the tension of the fully stretched canvas top. Thus, in a severe case, undesirable rainwater leakage occurs. Furthermore, such poor retaining of the canvas top tends to cause flapping of the same during high speed cruising of the vehicle.

The sunroof structure of JP-U-78020/86 shows a measure for solving the above-mentioned drawbacks. In the measure, there are employed a pair of straps by which longitudinal ends of both the guided and free supporting bows are strongly pressed against the peripheral side edges of the roof aperture when the canvas top assumes the fully closing position. That is, the straps extend across and over the longitudinal ends of the guided and free supporting bows and have respective front ends secured to the elongate front member of the canvas top and respective rear ends connected through respective tensioners to the rear end of the roof aperture. When the canvas top assumes the fully closing position having the elongate front member located in its frontmost position, the two straps are tightened or tensioned due to the work of the tensioners and thus the guided and free supporting bows, viz., the lateral sides of the canvas top, are pressed against the peripheral side edges of the roof aperture by the tensioned straps.

However, even in the sunroof structure of this publication, the biasing force applied to the free supporting bows by the straps is not sufficient. Thus, complete elimination of the above-mentioned undesirable phenomena has not been hitherto achieved.

### SUMMARY OF THE INVENTION

It is, therefore, an object of the present invention to provide a canvas top type sunroof structure, according to the preamble of claim 1, in which the force created by the biasing means provides a sufficient sealing contact between the lateral sides of the canvas top and the peripheral side edges of the roof aperture avoiding undesirable rain water leakage.

This object is achieved by the characterising features of claim 1.

According to the present invention, each of said flexible wires runs under each guided supporting bow and over each free supporting bow such that, as the canvas top is moved for covering said aperture in the roof of the vehicle, each of said wires functions to press down the free supporting bows against the lateral sides of the aperture.

The subclaims contain preferred embodiments of the present invention.

### BRIEF DESCRIPTION OF THE DRAWINGS

Other objects and advantages of the present invention will become apparent from the following description when taken in conjunction with the accompanying drawings, in which:
Fig. 1 is a perspective view of an essential portion of a canvas top type sunroof structure according to the present invention, with a canvas top removed;
Fig. 2 is a perspective view of the canvas top;
Fig. 3 is a side view of a part of the sunroof structure, showing a guided supporting bow and a free supporting bow in a condition wherein the free supporting bow is raised;
Fig. 4 is a perspective view of a tensioner to which a rear end of a flexible wire is connected; and
Fig. 5 is a sectional view of a retainer plate to which a front end of of the flexible wire is connected.

### DETAILED DESCRIPTION OF THE INVENTION

In the following, the present invention will be described in detail with reference to the accompanying drawings.

It is to be noted that since the parts other than the essential parts of the present invention are substantially described in United States Patent US-A-5,016,939 filed on April 6, 1989 in the name of Hiromitsu NISHIKAWA et al, a detailed explanation of the other parts will be omitted from the following description.

In the following description, the terms, such as, front, rear, right, left, forward, rearward and the like are to be understood with respect to a motor vehicle on which the sunroof structure of the invention is mounted.

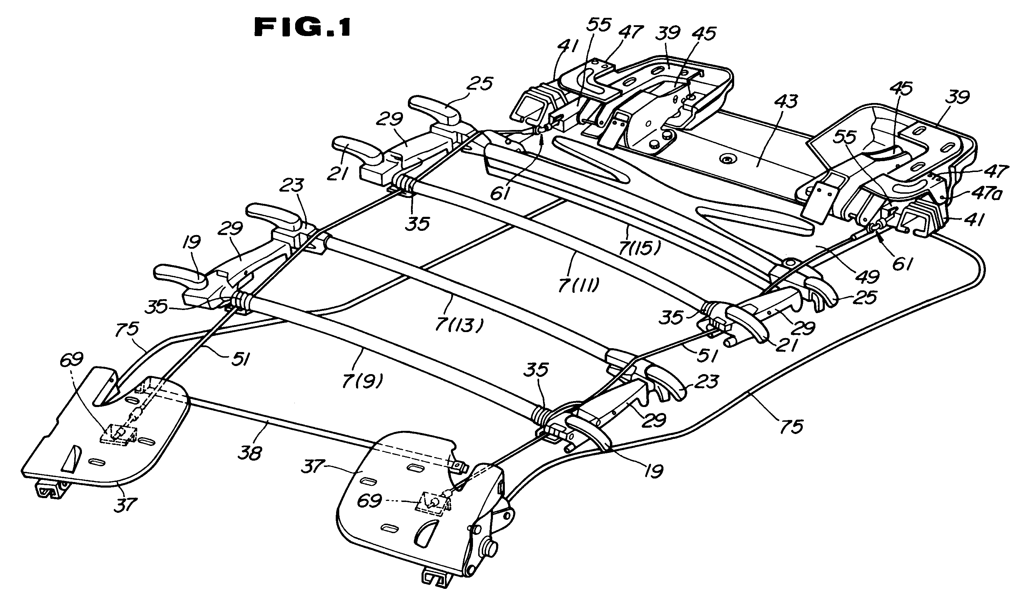

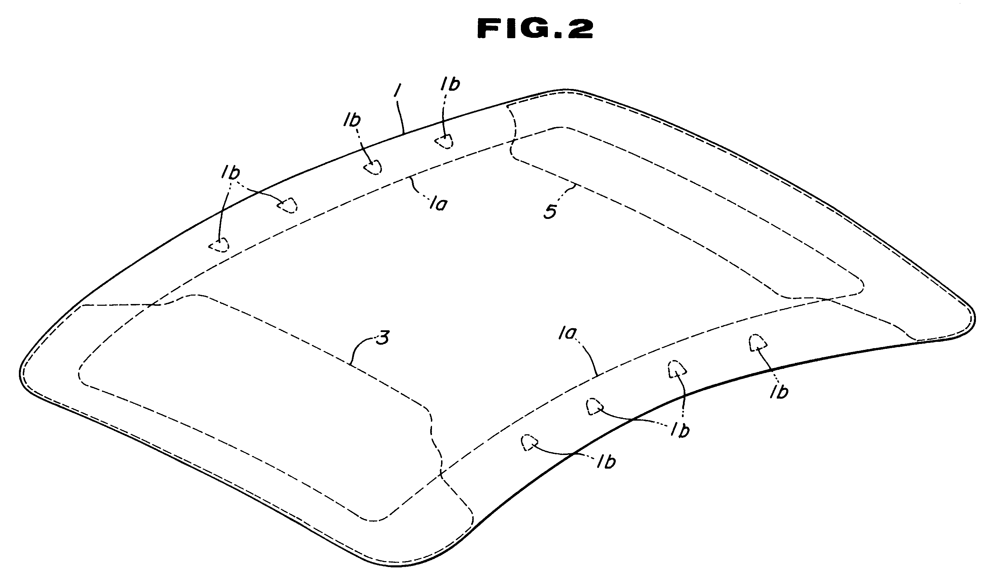

A canvas top is shown in Fig. 2, which is generally designated by numeral 1. The canvas top 1 has a front part supported on a front carry member 3, a rear part supported on a rear carry member 5 and a major middle part supported on four spaced supporting bows 7 (see Fig. 1).

As is seen from Fig. 1, when the canvas top 1 assumes its fully closing position, the four supporting bows 7 are equally spaced. The four supporting bows 7 comprise two guided supporting bows 9 and 11 which are arranged at first and third locations with respect to a front part (viz., a left side in Fig. 1) of an associated motor vehicle and two free supporting bows 13 and 15 which are arranged at second and fourth locations.

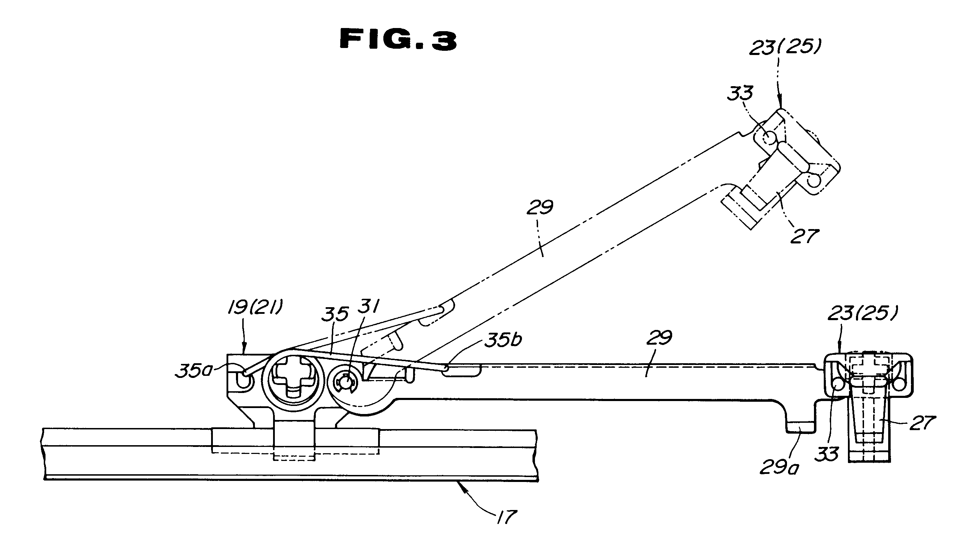

As is undestood from Figs. 1 and 3, each guided supporting bow 9 or 11 has at longitudinal both ends thereof slide pieces 19 and 21 which are slidably engaged with respective guide rails 17. The guide rails 17 extend along lateral sides of a canvas top frame (not shown) which is secured to the roof of the vehicle in a manner to surround a rectangular aperture formed in the vehicle roof. While, each free supporting bow 13 or 15 has at longitudinal both ends thereof floatable pieces 23 and 25 which are floatable from the guide rails 17.

These slide and floatable pieces 19, 21, 23 and 25 have respective projections which are mated with small openings 1b (see Fig. 2) formed in turned-back side portions 1a of the canvas top 1. With this, the major middle part of the canvas top 1 is supported by the four supporting bows 7.

It is to be noted that the canvas top 1 has a decorative inner layer which is held by the supporting bows 7 and the rear carry member 5 to serve as a head lining of a passenger room.

As is seen from Fig. 3, each floatable piece 23 or 25 has a hook portion 27 which, when the canvas top 1 assumes its fully closing position, is detachably engaged with an engaging member (not shown) secured to the corresponding guide rail 17.

As is seen from Fig. 3, the slide piece 19 or 21 and the floatable piece 23 or 25 are connected through an arm 29 which is hinged to the slide piece 19 or 21.

The arm 29 has a reversed U-shaped cross section. One end of the arm 29 is pivotally connected to the slide piece 19 or 21 through a pin 31 and the other end of the same is pivotally connected to the floatable piece 23 or 25 through a pin 33. The arm 29 has near the floatable piece 23 or 25 spaced lugs 29a which serve as guide rail catchers. That is, when the canvas top 1 is brought into the fully closing position pressing down the free supporting bows 13 and 15 toward the sunroof aperture, the arm 29 is pivoted down and thus the lugs 29a are brought into slidable engagement with the guide rail 17. Under this conditions undesired lateral play of the arm 29 is suppressed.

As is seen from Figs. 1 and 3, each slide piece 19 or 21 mounts thereon a coil spring 35 by which the corresponding arm 29 is biased to pivot upward, that is, in a counterclockwise direction in Fig. 3. For this biasing, one end 35a of the coil spring 35 is hooked to the slide piece 19 or 21 and the other end 35b of the same is hooked to the corresponding arm 29.

The front carry member 3 is of an elongate plate member, which extends in the direction of the width of the vehicle. The front carry member 3 has an upper surface fully covered with the canvas top 1 and a lower surface partially covered with the turned-back part of the same. The turned-back part is fixed to the front carry member 3 by means of bolts or the like.

As is understood from Fig. 1, the front carry member 3 is carried on paired front brackets 37 which are slidably engaged with the respective guide rails 17. Each bracket 37 has a tilting mechanism mounted therein. With this mechanism, each bracket 37 is permitted to tilt forward. The two front brackets 37 are connected to each other through a cross bar 38 to move simultaneously.

The rear carry member 5 is also of an elongate plate member, which extends in the direction of the width of the vehicle. The rear carry member 5 has an upper surface fully covered with the canvas top 1 and a lower surface partically covered with the turned-back part of the same. The turned-back part is fixed to the rear carry member 5 by means of bolts or the like.

As is understood from Fig. 1, the rear carry member 5 is mounted on respective rear brackets 39 which are mounted on spaced portions of a cross member 43. The cross member 43 has at its longitudinal ends respective rear sliders 41 which are slidably engaged with the guide rails 17. The cross member 43 has a pair of lock devices 45 mounted thereto, which function to latch the rear carry member 5 to the rear end of the roof aperture. The cross member 43 has further a pair of pressing arms 47 mounted thereto, which function to press the canvas top 1 against the vehicle roof when the canvas top 1 assumes the fully closing position. For this function, each pressing arm 47 has a downward projection 47a slidably engaged with a guide groove (not shown) which extends along the guide rail 17. That is, when the rear carry member 5 comes to its rearmost position for achieving the fully closing position of the canvas top 1, the downward projection 47a is brought to a downwardly curved rear part of the guide groove to press the rear carry member 5 downwardly.

The cross member 43 is fixed to a shade plate 49 which is secured to a lower surface of the rear carry member 5, the shade plate 49 having a front portion protruded forward by a certain degree.

Designated by numerals 75 and 75 in Fig. 1 are geared cables which are received in respective passages formed in lateral sides of the canvas top 1. Each geared cable 75 has a front end fixed to the front bracket 37. An electric drive unit (not shown) is mounted on a rear end portion of the sunroof aperture, by which the geared cables 75 and 75 are driven to move forward and rearward moving the canvas top 1 (more specifically, the front carry member 3) to the fully closing position and fully opening position selectively.

According to the present invention, there is employed the following measure:
That is, two flexible wires 51 are employed, each extending between the cross member 43 and one of the afore-mentioned front brackets 37. As is seen from Fig. 1, each flexible wire 51 extends forward from the cross member 43, runs over the free supporting bow 15, under the guided supporting bow 11, over the free supporting bow 13, under the guided supporting bow 9, and finally, the wire 51 is fixed to the front bracket 37 at its front end.

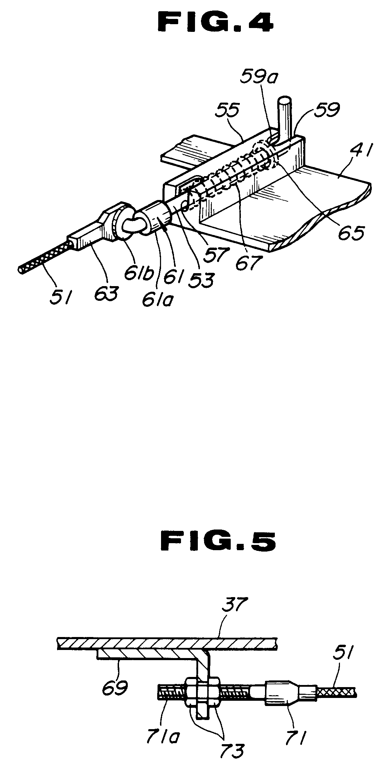

As is seen from Figs. 1 and 4, the rear end of each flexible wire 51 is connected through a connector 61 to a tensioner which is provided on the rear slider 41.

The tensioner comprises a raised hollow portion 55 defined by the rear slider 41, a rod 53 axially slidably received in the hollow portion 55 of the rear slider 41 and a coil spring 67 disposed in the hollow portion 55 to bias the rod 53 rearward. Designated by numerals 57 and 59 are front and rear openings of the hollow portion 55 through which the major part of the rod 53 passes. The coil spring 67 is disposed about the rod 53 and compressed between a spring seat 65 secured to the rod 53 and the front wall of the hollow portion 55.

The rod 53 has a normally bent rear end portion which extends upward from a cut merged with the rear opening 59 and a normally bent front end portion which is pivotally connected to an after-mentioned wire holder 63. It is to be noted that when the rod 53 is moved forward by a certain distance, the normally bent rear end portion of the rod 53 is brought into abutment with a front edge 59a of the cut thereby to restrict the forward movement of the rod 53.

As is seen from Fig. 4, the rear end of the flexible wire 51 has the holder 63 secured thereto. The holder 63 has an opening in which the afore-mentioned bent front end portion of the rod 53 is inserted. The connector 61 is used for facilitating the insertion of the front bent end portion of the rod 53 into the holder's opening. That is, the connector 61 is of a plastic member, which comprises a slitted sleeve portion 61a which detachably puts therein the rod 53 and an apertured base portion 61b which has a tubular latching plug latchingly mated with the opening of the holder 63.

As is seen from Figs. 1 and 5, the front end of each flexible wire 51 is connected to a retainer plate 69 secured to the front bracket 37. As is best shown in Fig. 5, the front end of the flexible wire 51 has a holder 71 secured thereto. The holder 71 has a threaded bolt 71a passed through an opening formed in a raised portion of the retainer plate 69. In order to fasten the bolt 71a to the retainer plate 69, nuts 73 are engaged with the threaded bolt 71a putting therebetween the raised portion of the retainer plate 69. Due to the nature of the threaded bolt 71a engaged with the nuts 73, the holder 71 and the retainer plate 69 can serve as a length adjuster for the flexible wire 51.

It is to be noted that the tensioner is so arranged as to compress the coil spring 67, and thus apply the flexible wire with a suitable tension, when the canvas top 1 assumes the fully closing position.

When the sunroof structure of the invention assumes its fully opened condition, the cross member 43 is latched to the rear end portion of the sunroof aperture by means of the lock devices 45 and the front brackets 37 are in their rearmost positions. Furthermore, under this condition, due to the work of the coil springs 35, the free supporting bows 13 and 15 are kept raised having two folds of the canvas top 1 formed behind the front carry member 3.

When, due to energization of the electric drive unit, the geared cables 75 are moved forward bringing the front brackets 37 (on which the front carry member 3 is mounted) to their frontmost positions, the canvas top 1 is brought to its fully closing condition. Under this condition, due to the tension created by the fully stretched canvas top 1, the free supporting bows 13 and 15 are forced to lie down against the force of the coil springs 35.

In the following, advantages given by the present invention will be described.

When the canvas top 1 assumes the fully closing position, the two flexible wires 51 function to press down the free supporting bows 13 and 15 against the lateral sides of the sunroof aperture. That is, as is seen from Fig. 1, when, due to the fully closing condition of the canvas top 1, each flexible wire 51 becomes tensioned due to the work of the wire tensioner, the free supporting bow 13 is effectively pressed down by a part of the wire 51 which is slidably caught by the lower surfaces of the adjacent guided supporting bows 9 and 11, and the other free supporting bow 15 is effectively pressed down by the other part of the wire 51 which is slidably caught by the lower surface of the adjacent guide supporting bow 11 and the rear slider 41.

It is thus to be noted that in accordance with the present invention, besides the tension created by the fully stretched canvas top 1, the tension of the flexible wires 51 is used for pressing the lateral sides of the canvas top 1 against the peripheral side edges of the sunroof aperture. Thus, the above-mentioned undesirable phenomena, such as, rainwater leakage, flapping of the canvas top, etc., are completely eliminated.

Because the flexible wires 51 run through the four supporting bows 9, 13, 11 and 15 alternately as described hereinabove, the downward pressing of the free supporting bows 13 and 15 is effectively achieved by the wires 51. This assures the elimination of the undesirable phenomena.

Because the rear end of each flexible wire 51 is resiliently connected to the rear slider 41 by means of the compressed spring 67, there is no need of raising the manufacturing accuracy of the parts associated with the flexible wire.

## Claims

1. A sunroof structure for a vehicle having an aperture in a roof of the vehicle, said sunroof structure comprising:
a pair of guide rails (17) which extend along respective sides of the aperture of said roof;
a canvas top (1) adapted to cover said aperture;
a front carry member (3) having a front part of said canvas top (1) secured thereto, said front carry member (3) being slidably engaged with said guide rails;
guided supporting bows (7, 9, 11) slidably engaged with said guide rails and carrying thereon a major middle part of said canvas top (1);
free supporting bows (7, 13, 15) alternating with said guided supporting bows (9, 11) said free supporting bows (13, 15) being pivotally supported by said guided supporting bows (9, 11) respectively and carrying thereon the major middle part of said canvas top (1);
biasing means (35) for biasing each free supporting bow (13, 15) upward relative to the associated guided supporting bows (9, 11);
connecting means for connecting a rear part of said canvas top (1) to a rear fixed portion of said aperture;
drive means for driving said front carry member (3) along said guide rails (17) between a frontmost position wherein said canvas top (1) fully closes said aperture and a rearmost position wherein said canvas top (1) fully opens said aperture; and
a flexible wire (51) having a front end connected to said front carry member (3) and a rear end connected to said connecting means (5),
**characterised in that**
each of said flexible wire (51) runs under each guided supporting bow (9, 11) and over each free supporting bow (13, 15) such that, as the canvas top (1) is moved for covering said aperture in the roof of the vehicle, each of said wire (51) functions to press down the free supporting bows (13, 15) against the lateral sides of the aperture.

2. A sunroof structure as claimed in claim 1, further comprising a tensioner which applies a tension to said flexible wire (51) when said canvas top (1) fully closes said aperture.

3. A sunroof structure as claimed in claim 1 or 2, in which said connecting means comprises:
a rear carry member (5) which has a rear part of said canvas top (1) secured thereto, said rear carry member (5) being slidably engaged with said guide rails (17); and
lock means (45) for locking said rear carry member (5) to the rear fixed portion of said aperture.

4. A sunroof structure as claimed in claim 3, in which said flexible wire (51) is put on said free supporting bows (13, 15), so that when said flexible wire (51) is tensioned, said free supporting bows (13, 15) are pressed downward by said flexible wire.

5. A sunroof structure as claimed in claim 4, in which said tensioner is arranged between said rear end of said flexible wire (51) and said rear carry member (5).

6. A sunroof structure as claimed in claim 5, in which said tensioner comprises:
a hollow structure (55) mounted on said rear carry member (5);
a rod (53) slidably put in said hollow structure, said rod having one end connected to said rear end of said flexible wire (51); and
a coil spring (67) arranged so as to be compressed by said rod (53) when said rod is pulled by said flexible wire (51).

7. A sunroof structure as claimed in claim 6, in which said coil spring (67) is disposed about said rod (53) and arranged in said hollow structure (55).

8. A sunroof structure as claimed in claim 6, in which said front end of said flexible wire (51) is connected to said front carry member (5) through a length adjuster.

9. A sunroof structure as claimed in claim 8, in which said length adjuster comprises:
a threaded bolt (71a) having one end connected to said front end of said flexible wire (51);
a retainer plate (69) secured to said front carry member (5), said retainer plate (69) having a raised part which has an opening through which said threaded bolt (71a) passes; and
nuts (73) engaged with said threaded bolt (71a) in a manner to put therebetween said raised part.

10. A sunroof structure as claimed in claim 1, in which each of said free supporting bows (13, 15) is supported by the associated guided supporting bow (9, 11) through a pivotal arm (29).

11. A sunroof structure as claimed in claim 10, in which said drive means comprises:
a geared cable (75) held by said canvas top (1) and having a front end fixed to said front carry member (3); and
an electric drive unit mounted to the rear end portion of said aperture for driving said geared cable (75) forward and rearward upon electric energization thereof.

## Patentansprüche

1. Schiebedachanordnung für ein Fahrzeug, das eine Öffnung im Dach des Fahrzeuges besitzt, wobei die Schiebedachanordnung aufweist:
ein Paar Führungsschienen (17), die sich entlang der jeweiligen Seiten der Öffnung des Daches erstrecken;
ein zur Abdeckung der Öffnung vorgesehenes Stoffverdeck (1);
ein vorderes Tragelement (3), an dem ein Vorderteil des Stoffverdeckes (1) befestigt ist, wobei das vordere Tragelement (3) mit den Führungsschienen gleitend in Eingriff steht;
geführte Stützbögen (7, 9, 11), die sich in gleitendem Eingriff mit den Führungsschienen befinden und an denen ein größerer Mittelabschnitt des Stoffverdeckes (1) abgestützt ist;
freie Stützbögen (7, 13, 15), die mit den geführten Stützbögen (9, 11) abwechseln, wobei die freien Stützbögen (13, 15) jeweils schwenkbar durch die geführten Stützbögen (9, 11) abgestützt sind und an denen der größere Mittelabschnitt des Stoffverdeckes (1) abgestützt ist;
Neigungsmittel (35) zur Neigung jedes freien Stützbogens (13, 15) nach oben, relativ zu dem zugehörigen geführten Stützbogen (9, 11);
Verbindungsmittel zur Verbindung eines hinteren Teils des Stoffverdeckes (1) mit einem hinteren feststehenden Abschnitt der Öffnung;
Antriebsmittel zur Bewegung des vorderen Tragelementes (3) entlang der Führungsschienen (17) zwischen einer vordersten Position, in der das Stoffverdeck (1) die Öffnung völlig verschließt und einer hintersten Stellung, in der das Stoffverdeck (1) die Öffnung vollständig freigibt; und
ein flexibles Kabel (51), das ein mit dem vorderen Tragelement (3) verbundenes vorderes Ende und ein mit den Verbindungsmitteln (5) verbundenes hinteres Ende besitzt,
**dadurch gekennzeichnet**, daß
jedes der flexiblen Kabel (51) unter jeden geführten Stützbogen (9, 11) und über jeden freien Stützbogen (13, 15) derart verläuft, daß, wenn das Stoffverdeck (1) zur Abdeckung der Öffnung im Dach des Fahrzeuges bewegt wird, jedes Kabel (51) zum Niederdrücken der freien Stützbögen (13, 15) gegen die seitlichen Begrenzungen der Öffnung dient.

2. Schiebedachanordnung nach Anspruch 1, die weiterhin einen Spanner aufweist, der das flexible Kabel (51) mit einer Spannung beaufschlagt, wenn das Stoffverdeck (1) die Öffnung vollständig schließt.

3. Schiebedachanordnung nach Anspruch 1 oder 2, bei der die Verbindungsmittel aufweisen:
ein hinteres Tragelement (5), an dem ein hinteres Teil des Stoffverdeckes (1) befestigt ist, wobei das hintere Tragelement (5) sich in gleitendem Eingriff mit den Führungsschienen (17) befindet, und
Verriegelungsmittel (45) zur Verriegelung des hinteren Tragelementes (5) mit dem hinteren feststehenden Abschnitt der Öffnung.

4. Schiebedachanordnung nach Anspruch 3, bei der das flexible Kabel (51) so an die freien Stützbögen (13, 15) gelegt ist, daß, wenn das flexible Kabel (51) gespannt wird, die freien Stützbögen (13, 15) durch das flexible Kabel nach unten gedrückt werden.

5. Schiebedachanordnung nach Anspruch 4, bei der der Spanner zwischen dem hinteren Ende des flexiblen Kabels (51) und dem hinteren Tragelement (5) angeordnet ist.

6. Schiebedachanordnung nach Anspruch 5, bei der der Spanner aufweist:
eine Hohlstruktur (55), die an dem hinteren Tragelement (5) befestigt ist;
eine in der Hohlstruktur gleitend aufgenommene Stange (53), wobei ein Ende der Stange mit dem hinteren Ende des flexiblen Kabels (51) verbunden ist, und
eine Schraubenfeder (67), die so angeordnet ist, um durch die Stange (53) zusammengedrückt zu werden, wenn die Stange durch das flexible Kabel (51) gezogen wird.

7. Schiebedachanordnung nach Anspruch 6, bei der die Schraubenfeder (67) um die Stange (53) herum angeordnet und in der Hohlstruktur (55) angeordnet ist.

8. Schiebedachanordnung nach Anspruch 6, bei der das vordere Ende des flexiblen Kabels (51) durch einen Längeneinstellmechanismus mit dem vorderen Tragelement (5) verbunden ist.

9. Schiebedachanordnung nach Anspruch 8, bei der der Längeneinstellmechanismus aufweist:
einen Gewindebolzen (71a), der ein mit dem vorderen Ende des flexiblen Kabels (51) verbundenes Ende besitzt;
eine Halteplatte (69), die an dem vorderen Tragelement (5) gesichert ist, wobei die Halteplatte (69) einen erhabenen Abschnitt besitzt, der eine Öffnung aufweist, durch die der Gewindebolzen (71a) verläuft; und
Muttern (73), die mit dem Gewindebolzen (71a) in einer Weise in Eingriff stehen, so daß der erhabene Abschnitt dazwischen aufgenommen ist.

10. Schiebedachanordnung nach Anspruch 1, bei der jeder der freien Stützbögen (13, 15) durch einen Schwenkarm (29) an dem zugehörigen geführten Stützarm (9, 11) abgestützt ist.

11. Schiebedachanordnung nach Anspruch 10, bei der die Antriebsmittel aufweisen:
ein gezahntes Kabel (75), das durch das Stoffverdeck (1) gehalten ist und ein Vorderende besitzt, das an dem vorderen Tragelement (3) befestigt ist, und
eine elektrische Antriebseinheit, die am hinteren Endabschnitt der Öffnung befestigt ist, zum Vor- und Rückwärtsantreiben des gezahnten Kabels (75) bei Versorgung derselben mit elektrischem Strom.

## Revendications

1. Structure de toit ouvrant pour un véhicule présentant une ouverture dans le toit du véhicule, ladite structure de toit ouvrant comprenant :
une paire de rails de guidage (17) qui s'étendent le long des côtés respectifs de l'ouverture dudit toit ;
un dessus en toile (1) apte à couvrir ladite ouverture ;
un élément de support avant (3) auquel est fixé une partie avant dudit dessus en toile (1), ledit élément de support avant (3) étant en prise de coulissement avec lesdits rails de guidage ;
des arcs de support guidés (7, 9, 11) en prise de coulissement avec lesdits rails de guidage et supportant sur ceux-ci une partie médiane majeure dudit dessus en toile (1) ;
des arcs de support libres (7, 13, 15) alternant avec lesdits arcs de support guidés (9, 11), lesdits arcs de support libres (13, 15) étant supportés de façon pivotante par lesdits arcs de support guidés (9, 11), respectivement et supportant sur ceux-ci la partie médiane majeure dudit dessus en toile (1) ;
des moyens de sollicitation (35) pour solliciter chaque arc de support libre (13, 15) vers le haut relativement aux arcs de support guidés associés (9, 11) ;
des moyens de contact pour connecter une partie arrière dudit dessus en toile (1) à une portion fixe arrière de ladite ouverture ;
des moyens d'entraînement pour entraîner ledit élément de support avant (3) le long desdits rails de guidage (17) antre une position la plus avant dans laquelle ledit dessus en toile (1) ferme entièrement ladite ouverture et une position la plus arrière dans laquelle ledit dessus an toile (1) ouvre entièrement ladite ouverture ; et
un fil flexible (51) dont une extrémité avant est connectée audit élément de support avant (3) et dont une extrémité arrière est connectée audit moyen de connexion (5),
caractérisé en ce que chacun desdits fils flexibles (51) passe sous chaque arc de support guidé (9, 11) et sur chaque arc de support libre (13, 15) de façon que lorsque le dessus en toile (1) est déplacé pour couvrir ladite ouverture dans le toit du véhicule, chacun desdits fils (51) fonctionne pour presser vers le bas les arcs de support libres (13, 15) contre les côtés latéraux de l'ouverture.

2. Structure de toit ouvrant selon la revendication 1, comprenant an outre un tendeur qui applique une tension audit fil flexible (51) lorsque ledit dessus en toile (1) ferme entièrement ladite ouverture.

3. Structure de toit ouvrant selon la revendication 1 ou 2, dans laquelle ledit moyen de connexion comprend :
un élément de support arrière (5) auquel est fixé une partie arrière dudit dessus en toile (1), ledit élément de support arrière (5) étant an prise de coulissement avec lesdits rails de guidage (17) ; et
des moyens de verrouillage (45) pour verrouiller ledit élément de support arrière (5) à la portion fixée arrière de ladite ouverture.

4. Structure de toit ouvrant selon la revendication 3, dans laquelle ledit fil flexible (51) est placé sur lesdits arcs de support libres (13, 15) de sorte que lorsque ledit fil flexible (51) est tendu, lesdits arcs de support libres (13, 15) soient pressés vers le bas par ledit fil flexible.

5. Structure de toit ouvrant selon la revendication 4, dans laquelle ledit tendeur est agencé entre ladite extrémité arrière dudit fil flexible (51) et ledit élément de support arrière (5).

6. Structure de toit ouvrant selon la revendication 5, dans laquelle ledit tendeur comprend :
une structure creuse (55) montée sur ledit élément de support arrière (5) ;
une tige (53) placée de façon coulissante dans ladite structure creuse, une extrémité de ladite tige étant connectée a ladite extrémité arrière dudit fil flexible (51) ; et
un ressort hélicoïdal (67) agencé de façon à être comprimé par ladite tige (53) lorsqu'une traction est exercée sur ladite tige par ledit fil flexible (51).

7. Structure de toit ouvrant selon la revendication 6, dans laquelle ledit ressort hélicoïdal (67) est disposé autour de ladite tige (53) et agencé dans ladite structure creuse (55).

8. Structure de toit ouvrant selon la revendication 6, dans laquelle ladite extrémité avant dudit fil flexible (51) est connectée audit élément de support avant (5) par un organe d'ajustage de la longueur.

9. Structure de toit ouvrant selon la revendication 8, dans laquelle ledit organe d'ajustage de la longueur comprend :
un boulon fileté (71a) dont une extrémité est connectée à ladite extrémité avant dudit fil flexible (51) ;
une plaque de retenue (69) fixée audit élément de support avant (5), ladite plaque de retenue (69) ayant une partie relevée pourvue d'une ouverture à travers laquelle ledit boulon fileté (71a) passe ; et
des écrous (73) mis en prise avec ledit boulon fileté (71a) de manière à placer entre ceux-ci ladite partie relevée.

10. Structure de toit ouvrant selon la revendication 1, dans laquelle chacun des arcs de support libres (13, 15) est supporté par l'arc de support guidé associé (9, 11) par un bras pivotant (29).

11. Structure de toit ouvrant selon la revendication 10, dans laquelle ledit moyen d'entraînement comprend :
un câble commandé (75) maintenu par ledit dessus en toile (1) et présentant une extrémité avant fixée audit élément de support avant (3) ; et
une unité d'entraînement électrique montée sur la portion d'extrémité arrière de ladite ouverture pour entraîner ledit câble commandé (75) vers l'avant et vers l'arrière à la suite d'une excitation électrique de celui-ci.
